(19) Europäisches Patentamt
European Patent Office
Office européen des brevets

(11) **EP 1 586 180 B1**

(12) **EUROPÄISCHE PATENTSCHRIFT**

(45) Veröffentlichungstag und Bekanntmachung des Hinweises auf die Patenterteilung:
**26.12.2007 Patentblatt 2007/52**

(21) Anmeldenummer: **04701946.8**

(22) Anmeldetag: **14.01.2004**

(51) Int Cl.:
***H04L 12/56*** *(2006.01)*

(86) Internationale Anmeldenummer:
**PCT/EP2004/000218**

(87) Internationale Veröffentlichungsnummer:
**WO 2004/066567 (05.08.2004 Gazette 2004/32)**

(54) **VERKEHRSBESCHRÄNKUNG BEI PAKETORIENTIERTEN NETZEN MITTELS LINKABHÄNGIGER GRENZWERTE FÜR DEN DIE NETZGRENZEN PASSIERENDEN VERKEHR**

TRAFFIC RESTRICTION IN PACKET-ORIENTED NETWORKS BY MEANS OF LINK-DEPENDENT LIMITING VALUES FOR THE TRAFFIC PASSING THE NETWORK BOUNDARIES

LIMITATION DU TRAFIC DANS DES RESEAUX ORIENTES PAQUETS A L'AIDE DE VALEURS LIMITES DEPENDANT DES LIAISONS POUR LE TRAFIC PASSANT LES LIMITES DU RESEAU

(84) Benannte Vertragsstaaten:
**DE FR GB NL**

(30) Priorität: **20.01.2003 DE 10301967**

(43) Veröffentlichungstag der Anmeldung:
**19.10.2005 Patentblatt 2005/42**

(73) Patentinhaber: **NOKIA SIEMENS NETWORKS GMBH & CO. KG**
**81541 München (DE)**

(72) Erfinder: **MENTH, Michael**
**Gelchsheim/oellingen D-97255 (DE)**

(56) Entgegenhaltungen:
**WO-A-01/54448        WO-A-01/80485**
**US-A1- 2002 194 369**

## Beschreibung

Die Erfindung betrifft ein Verfahren zur Verkehrsbegrenzung in einem paketorientierten Netz.

Derzeit ist die Entwicklung von Technologien für paketbasierte Netze ein zentrales Betätigungsfeld für Ingenieure aus den Gebieten der Netztechnik, der Vermittlungstechnik und der Internet-Technologien.

Dabei steht das Ziel im Vordergrund, möglichst ein paketorientiertes Netz für beliebige Dienste verwenden zu können. Traditionell werden über paketorientierte Netze zeitunkritische Datenübertragungen vorgenommen, wie z.B. der Transfer von Dateien oder elektronischer Mail. Sprachübertragung mit Echtzeitanforderungen wird traditionell über Telefonnetze mit Hilfe von der Zeitmultiplextechnik abgewickelt. Man spricht in diesem Zusammenhang häufig auch von TDM (time division multiplexing) Netzen. Mit der Verlegung von Netzen mit hoher Bandbreite bzw. Übertragungskapazität ist neben der Daten- und Sprachübertragung auch die Realisierung von Bildbezogenen Diensten in den Bereich des Machbaren gerückt. Übertragung von Videoinformationen in Echtzeit, z.B. im Rahmen von Video-on-demand Diensten oder Videokonferenzen, wird eine wichtige Kategorie von Diensten zukünftiger Netze sein.

Die Entwicklung zielt dahin, möglichst alle Dienste, datenbezogene, sprachbezogene und auf Videoinformationen bezogene, über ein paketorientiertes Netz durchführen zu können. Für die verschiedenen Anforderung bei der Datenübertragung im Rahmen der verschiedenen Dienste definiert man üblicherweise Dienstklassen. Die Übertragung mit einer definierten Dienstqualität (quality of service) vor allem bei Diensten mit Echtzeitanforderungen verlangt eine entsprechende Steuerung bzw. Kontrolle für die Paketübertragung über das Netz. Im Englischen gibt es eine Reihe von Begriffen die sich auf die Kontrolle bzw. Steuerung des Verkehrs beziehen: traffic management, traffic conditioning, traffic shaping, traffic engineering, policing etc. Verschiedene Vorgehensweisen für eine Kontrolle bzw. Steuerung für den Verkehr eines paketorientierten Netzes sind in der einschlägigen Literatur beschrieben.

Bei ATM (asynchroneous transfer mode) Netzen wird für jede Datenübertragung auf der gesamten Übertragungsstrecke eine Reservierung vorgenommen. Durch die Reservierung wird das Verkehrsaufkommen beschränkt. Zur Überwachung findet abschnittsweise eine Überlastkontrolle statt. Eine eventuelle Verwerfung von Paketen wird nach Maßgabe des CLP-Bits (CLP: Cell loss priority) des Paketheaders vorgenommen.

Das Diff-Serv Konzept wird bei IP (internet protocol) Netzen angewendet und zielt auf eine bessere Dienstqualität für Dienste mit hohen Qualitätsanforderungen durch Einführung von Dienstklassen. Man spricht in diesem Zusammenhang auch häufig von einem CoS (class of service) Modell. Das Diff-Serv Konzept ist in den von der IETF veröffentlichten RFCs mit den Nummern 2474 und 2475 beschrieben. Im Rahmen des Diff-Serv Konzepts wird mit Hilfe eines DS (Differentiated Services) Feldes im IP Header der Datenpakete durch Setzen des DSCP (DS codepoint) Parameters eine Priorisierung des Paketverkehrs vorgenommen. Diese Priorisierung erfolgt mit Hilfe einer "per hop" Ressourcenallokation, d.h. die Pakete erfahren bei den Knoten je nach der im DS Feld durch den DSCP Parameter festgelegten Dienstklasse (class of service) eine unterschiedliche Behandlung. Die Kontrolle bzw. Steuerung des Verkehrs wird also nach Maßgabe von den Dienstklassen vorgenommen. Das Diff-Serv Konzept führt zu einer privilegierten Behandlung von dem Verkehr priorisierter Dienstklassen, nicht jedoch zu einer zuverlässigen Kontrolle des Verkehrsvolumens.

Ein anderer Ansatz für im Hinblick auf eine quality of service Übertragung über IP Netze ist durch das RSVP (resource reservation protocol) gegeben. Bei diesem Protokoll handelt es sich um ein Reservierungsprotokoll, mit dessen Hilfe eine Bandbreitenreservierung entlang eines Pfades vorgenommen wird. Über diesen Pfad kann dann eine quality of service (QoS) Übertragung stattfinden. Das RSVP Protokoll wird zusammen mit dem MPLS (multi protocol label switching) Protokoll eingesetzt, das virtuelle Pfade über IP Netze ermöglicht. Für eine Garantie der QoS Übertragung wird in der Regel entlang des Pfades das Verkehrsaufkommen kontrolliert und gegebenenfalls beschränkt. Ein solches Konzept wird z.B. im Dokument US 2002/194369 (Rawlins Diana et AL), 19. Dezember, 2002, offenbart. Durch die Einführung von Pfaden verliert man jedoch viel von der ursprünglichen Flexibilität von IP Netzen.

Zentral für Garantien von Übertragungsqualitätsparametern ist eine effiziente Kontrolle des Verkehrs. Bei einer Kontrolle des Verkehrsaufkommen im Rahmen von Datenübertragung über paketorientierte Netze ist zudem auf eine hohe Flexibilität und geringe Komplexität bei der Datenübertragung zu achten, wie sie z.B. IP Netze in hohem Maße aufweisen. Diese Flexibilität bzw. geringe Komplexität geht bei der Verwendung des RSVP Protokolls mit einer Ende-zu-Ende Pfadreservierung jedoch zu einem großen Teil wieder verloren. Andere Verfahren wie Diff-Serv führen zu keinen garantierten Dienstklassen.

Die Erfindung hat zur Aufgabe, eine effiziente Verkehrskontrolle für ein paketorientiertes Netz anzugeben, das die Nachteile herkömmlicher Verfahren vermeidet.

Die Aufgabe wird durch ein Verfahren zur Verkehrsbegrenzung in einem paketorientierten Netz nach Anspruch 1 oder Anspruch 2 gelöst.

Im Rahmen der erfindungsgemäßen Verfahren wird für eine Gruppe von über das Netz zu übertragenden Datenpaketen eines Flows eine auf alle Teilstrecken bezogene Zulässigkeitsprüfung durchgeführt. Bei dem ersten erfindungsgemäßen Verfahren wird die Zulässigkeitsprüfung mittels eines Grenzwertes für den Teil des überg alle Teilstrecken fließenden Verkehrs durchgeführt, der bei dem Netzeingangsknoten in das Netz gelangt ist, über den auch die Gruppe von Datenpaketen in das Netz gelangen soll. Die Übertragung der Gruppe von Datenpaketen wird nicht zugelassen, wenn ein Zulassen der Übertragung zu einem den Grenzwert überschreitenden Verkehrsaufkommen führen würde.

Bei dem zweiten erfindungsgemäßen Verfahren wird die Zulässigkeitsprüfung mittels eines Grenzwertes für den Teil des über den Teilabschnitt fließenden Verkehrs durchgeführt, der zu dem Netzausgangsknotenknoten weiterübertragen wird, über den die Gruppe von Datenpaketen das Netz verlassen soll. Die Übertragung der Gruppe von Datenpaketen wird nicht zugelassen, wenn ein Zulassen der Übertragung zu einem den Grenzwert überschreitenden Verkehrsaufkommen führen würde.

Gemäß einer Weiterbildung werden für die Pakete des Flows zwei Zulässigkeitsprüfungen durchgeführt, eine mittels des Grenzwertes für den über den Netzeingangsknoten des Flows geleiteten Verkehr, der über den Teilabschnitt fließt, die andere mit Hilfe des Grenzwertes für den über den Teilabschnitt geleiteten Verkehr, der das Netz über den gleichen Netzausgangsknoten wie der Flow verlässt.

Zulässigkeitsprüfungen können beispielsweise bei dem Netzeingangsknoten, über den der Flow in das Netz übertragen werden soll, durchgeführt werden.

Ein Teilabschnitt kann beispielsweise durch die Verbindung von zwei Netzknoten gegeben sein. Statt Teilabschnitt werden auch die Begriffe Verbindungsabschnitt und Link verwendet.

Bei dem paketorientierten Netz kann es sich auch um ein Teilnetz oder Subnetz handeln. In IP (Internet Protocol) Systemen gibt es z.B. Netzarchitekturen, bei denen das Gesamtnetz in "autonome Systeme" bzw. "autonomous system" genannte Netze unterteilt ist. Das erfindungsgemäße Netz kann z.B. ein autonomes System oder der Teil des Gesamtnetzes im Zuständigkeitsbereich eines Dlenstaribleters (z.B. ISP: internet service provider) sein. Im Falle eines Teilnetzes können über eine Verkehrskontrolle in den Teilnetzen und eine effiziente Kommunikation zwischen den Teilnetzen Dienstparameter für eine Übertragung über das Gesamtnetz festgelegt werden.

Der Begriff "Flow" wird üblicherweise verwendet, um den Verkehr zwischen einer Quelle und einem Ziel zu bezeichnen. Hier bezieht sich Flow auf den Eingangsknoten und den Ausgangsknoten des paketorientierten Netzes, d.h. alle Pakete eines Flows im Sinne unseres Sprachgebrauchs werden über den selben Eingangsknoten und den selben Ausgangsknoten übertragen. Die Gruppe von Paketen ist beispielsweise einer Verbindung (bei einer TCP/IP Übertragung definiert durch IP Adresse und Portnummer von Ausgangs- und Zielprozess) und/oder einer Dienstklasse zugeordnet.

Eingangsknoten des paketorientierten Netzes sind Knoten, über die Pakete in das Netz geleitet werden; Ausgangsknoten sind Knoten des Netzes, über die Pakete das Netz verlassen. In der englischsprachigen Literatur spricht man häufig von ingress nodes und egress nodes. Beispielsweise kann ein Netz gegeben sein, das Randknoten und innere Knoten umfasst. Wenn z.B. über alle Randknoten des Netzes Pakete in das Netz gelangen oder das Netz verlassen können, wären in diesem Falle die Randknoten des Netzes sowohl Netzeingangsknoten sowie Netzausgangsknoten.

Ein erfindungsgemäßer Zulässigkeitstest kann durch eine Kontrollinstanz in einem Knoten oder den Knoten vorgeschalteten Rechnern durchgeführt werden. Eine Kontrollinstanz kann dabei für mehrere Knoten Kontrollfunktionen übernehmen.

Durch die erfindungsgemäße Zulässigkeitsprüfung wird das Verkehrsaufkommen auf einen Teilabschnitt des Netzes kontrolliert. Eine Grenze für das gesamte Verkehrsvolumen des Teilabschnittes kann durch Summation über alle Eingangsknoten bzw. Ausgangsknoten des Netzes der auf den Teilabschnitt bezogenen Grenzwerte ermittelt werden. Durch die Verkehrsbeschränkung können Überlastsituationen bzw. Blockierungen auf dem Teilabschnitt verhindert werden. Beispielsweise werden mit Hilfe von statistischen Informationen Grenzwerte so festgesetzt, dass eine Überlast bzw. Blockierung nur mit einer sehr geringen Wahrscheinlichkeit auftritt. Verzögerungen und Verwerfung von Paketen werden dadurch vermieden.

Eine erfindungsgemäße Beschränkung bzw. Kontrolle des Verkehrsvolumens kann für alle Teilabschnitte des Netzes durchgeführt werden. Für einen zu übertragenden Flow wird dann für alle Teilabschnitte, über die Pakete des Flows übertragen werden sollen, eine erfindungsgemäße Zugangskontrolle durchgeführt und der Flow nicht zugelassen, wenn eine der Zugangskontrollen nicht positiv ausfällt, d.h. für einen Link im Pfad eines Datenpaketes des Flows der Grenzwert überschritten wird.

Die Beschränkung des Verkehrsaufkommen kann im Sinne einer Übertragung mit ausgehandelten Dienstqualitätsmerkmalen (SLA: service level agreements) vorgenommen werden, z.B. nach Maßgabe der Priorisierung des Verkehrs. Für niedrig priorisierten Verkehr kann z.B. durch der Grenzwerte eine höhere Verwurfwahrscheinlichkeit in Kauf genommen werden.

Für eine Garantie für Dienste mit QoS Datenübertragung ist es wichtig, das gesamte Verkehrsaufkommen innerhalb des Netzes zu kontrollieren. Dieses Ziel kann erreicht werden, indem für alle Netzeingangsknoten und Netzausgangsknoten Grenzwerte für den über die Knoten geleiteten Verkehr festgesetzt werden. Die auf Teilstrecken bezogenen Grenzwerte für den über Eingangs- und Ausgangsknoten geleiteten Verkehr können mit Werten für das maximale Verkehrsaufkommen der jeweiligen Teilstrecke in Zusammenhang gesetzt werden, indem die Genzwerte für alle Netzeingangsknoten bzw. Netzausgangsknoten aufsummiert werden. Der maximale Wert für das Verkehrsaufkommen auf Teilstrecken wird sich dabei im Allgemeinen nicht nur nach der Bandbreite, sondern auch nach der verwendeten Netzwerktechnologie richten. Z.B. wird in der Regel zu berücksichtigen sein, ob es sich um ein LAN (Local area Network), ein MAN (Metropolitan Area network), ein WAN (Wide Area network) bzw. ein Backbone-Netzwerk handelt. Andere Parameter als die Übertragungskapazität, wie z.B. Verzögerungen bei der Übertragung, müssen z.B. für Netze für Echtzeitanwendungen mitberücksichtigt werden. Beispielsweise ist ein Auslastungsgrad nahe bei 100% für LAN mit CSMA/CD (Carrier Sense Multiple Access (with) Collision Detection) mit Verzögerungen verbunden, die Echtzeit-Anwendungen in der Regel ausschließen. Aus den maximalen Werten für das maximale Verkehrsaufkommen auf Teilstrecken lassen sich dann die Grenzwerte für den über die Eingangs- und Ausgangsknoten geleiteten Verkehr festlegen.

Der Zusammenhang zwischen einzelnen, beispielsweise mittels Netzeingangsknoten und Netzausgangsknoten charakterisierbaren Flows und dem anteilsmäßigen Verkehrsaufkommen über die einzelnen Teilstrecken des Netzes können anhand von Erfahrenswerten oder bekannten Eigenschaften von Knoten und Teilabschnitten ermittelt werden. Möglich ist auch, das Netz auszumessen, um diese die anteilsmäßigen Verkehrsaufkommen über die einzelnen Teilstrecken in Abhängigkeit von Netzeingangsknoten und Netzausgangsknoten zu erhalten. In der Verkehrstheorie benützt man häufig die Begriffe Verkehrsmatrix und Verkehrsmuster. Die Einträge der Verkehrsmatrix sind dabei durch die mittlere Verkehrsmenge gegeben, die zwischen den Matrixelementen zugeordneten Paaren aus Netzeingang und Netzausgang erwartet wird. Davon unterschieden wird der begriff des Verkehrsmusters, das den real anliegenden Verkehr bezeichnet. Aus Verkehrsmatrix und Informationen über das Routing innerhalb des Netzes können die erfindungsgemäß verwendeten Grenzwerte so bestimmt werden, dass Überlastsituationen vermieden werden.

Die Erfindung hat den Vorteil, dass Informationen für die Zugangskontrolle nur bei Eingangs- und Ausgangsknoten vorgehalten werden müssen. Diese Informationen umfassen für einen Eingangsknoten bzw. Ausgangsknoten z.B. die Grenzwerte und aktuellen Werte für den über den jeweiligen Knoten geleiteten Verkehr. Der Umfang der Informationen ist beschränkt. Die Aktualisierung der Information ist wenig aufwändig. Die inneren Knoten brauchen hinsichtlich der Zulässigkeitskontrolle keine Funktionen übernehmen. Das Verfahren ist somit erheblich aufwandsärmer und hat einen niedrigeren Komplexitätsgrad als Verfahren, die für einzelne Teilstrecken Zulässigkeitskontrollen vorsehen. Im Gegensatz zu herkömmlichen Verfahren wie ATM oder MPLS braucht innerhalb des Netzes kein Pfad reserviert zu werden.

Erfindungsgemäße Zugangskontrollen können mit weiteren Zugangskontrollen kombiniert werden, wobei die Pakete des Flows zugelassen werden, wenn alle Zugangskontrollen positiv ausfallen. Mögliche andere Zugangskontrollen verwenden z.B. folgende Grenzwerte:

- Grenzwert für den gesamten Verkehr, der über einen Eingangsknoten (ingress node) in das Netz fließt.
- Grenzwert für den gesamten Verkehr, der über einen Ausgangsknoten (egress node) das Netz verlässt.
- Grenzwert für den gesamten Verkehr zwischen einem Paar aus einem Eingangsknoten (ingress node) und einem Ausgangsknoten (egress node).

Diese weiteren Zugangskontrollen können alle am Netzrand durchgeführt werden, so dass die inneren Knoten des Netzes keine auf Teilstecken bezogene Zustandsinformationen für die Zugangskontrolle speichern müssen.

Es kann ein Zusammenhang zwischen dem gesamten Verkehrsvolumen auf den einzelnen Teilstrecken des Netzes und der bei den Zulassungskontrollen verwendeten Grenzwerten aufgestellt werden. Dieser Zusammenhang kann als Optimierungsproblem mit Randbedingungen bzw. Nebenbedingungen in Form von Ungleichungen hergestellt werden. Dabei fließt das anteilsmäßige Verkehrsaufkommen über die einzelnen Teilstrecken des Netzes zur Formulierung des Zusammenhangs zwischen den Verkehrsaufkommen zwischen Paaren von Netzeingangsknoten und Netzausgangsknoten und dem Verkehrsaufkommen auf Teilstrecken des Netzes ein.

Diese Formulierung erlaubt zusätzlich, weitere Kriterien in Form von Ungleichungen in die Bestimmung der Grenzen bzw. Grenzwerte für die Zulässigkeitsprüfungen aufzunehmen. Es können z.B. bei der Bestimmung von Grenzen bzw. Grenzwerten für die Zulässigkeitsprüfungen Bedingungen in Form von Ungleichungen aufgenommen werden, die ein geringes Verkehrsaufkommen von hochpriorisierten Verkehr auf Teilstrecken mit größeren Verzögerungszeiten bedingen. Ein anderes Beispiel ist das eines Ausgangsknoten, über den Pakete zu mehreren Eingangsknoten von anderen Netzen übertragen werden können, d.h. der Ausgangsknoten hat Schnittstellen zu mehreren anderen Netzen. Wenn Eingangsknoten eines der nachfolgenden Netze ein geringeres Datenvolumen als der Ausgangsknoten bearbeiten kann, kann durch eine weitere Nebenbedingung in Form einer Ungleichung sicher gestellt werden, dass der über den Ausgangsknoten zu dem Eingangsknoten geleitete Verkehr dessen Kapazität übersteigt.

Entsprechend einer Weiterbildung der Erfindung werden bei Ausfall einer Teilstrecke die Grenzen bzw. Grenzwerte für die Zulässigkeitsprüfung bzw. die Zulässigkeitsprüfungen neu mit der Bedingung festgesetzt werden, dass über die ausgefallene Teilstrecke keine Pakete übertragen werden. Durch die erneute Festsetzung der Grenzen wird erreicht, dass über andere Links der Verkehr geleitet wird, der sonst über den ausgefallenen Link übertragen worden wäre, ohne dass es zu einer Überlast durch den umgeleiteten Verkehr käme. Es kann so flexibel auf Ausfälle reagiert werden.

Ein vorsorglicher Schutz gegen Linkausfälle kann durch die Wahl der Grenzwerte bzw. Grenzen gewährleistet werden. Dabei werden für eine Mehrzahl von möglichen Störfällen jeweils Grenzen bzw. Grenzwerte bestimmt, bei denen das Verkehrsaufkommen auch im Störfall in einem zulässiger Rahmen bleibt, d.h. Parameter wie Laufzeitverzögerung und Paketverlustrate in durch die Qualitätsanforderungen für die Datenübertragung definierten Bereichen bleiben. Die Grenzen bzw. Grenzwerte werden dann auf das Minimum der Werte für die untersuchten Störfälle gesetzt. D.h. jeder der Störfälle ist durch die Wahl der Grenzen bzw. Grenzwerte abgefangen. Die Mehrzahl der Störfälle kann z.B. alle Ausfälle von Links umfassen.

Die Erfindung wird im folgenden anhand einer Figur im Rahmen eines Ausführungsbeispiels näher erläutert.

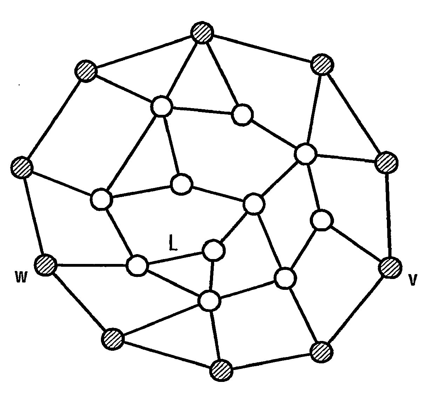

Die Figur zeigt ein erfindungsgemäßes Netz. Randknoten sind durch gefüllte Kreise, innere Knoten durch nicht gefüllte Kreise gekennzeichnet. Links sind durch Verbindungen zwischen den Knoten dargestellt. Exemplarisch ist ein Eingangsknoten mit w, ein Ausgangsknoten mit v und ein Link mit L bezeichnet. Über den Link L wird ein Teil des Verkehrs zwischen den Knoten I und E übertragen. Zulässigkeitsprüfungen bei dem Eingangsknoten w und bei dem Ausgangsknoten v stellen zusammen mit den Zulässigkeitsprüfungen bei anderen Randknoten sicher, dass keine Überlast bei dem Link L auftritt.

Im folgenden werden mathematische Zusammenhänge für das erfindungsgemäße Verfahren dargestellt. In der Praxis werden in der Regel Grenzen bzw. Grenzwerte in Abhängigkeit der maximalen Linkkapazitäten festgesetzt. Ob der einfacheren mathematischen Darstellung wird im folgenden der umgekehrte Fall betrachtet, d.h. in Abhängigkeit der Grenzen bzw. Grenzwerte die Dimensionierung der Links berechnet. Die Lösung des umgekehrten Problems kann dann mit numerischen Methoden erfolgen.

Für die folgende detailliertere Darstellung werden folgende Größen eingeführt:

ILB(L,w): Der Grenzwert für den Verkehr über den Link L, welcher bei dem Netzeingangsknoten w in das Netz eintritt (ILB steht für Ingress Link Budget),

ELB(L,v): Der Grenzwert für den Verkehr über den Link L, welcher bei dem Netzausgangsknoten v das Netz verlässt (ELB steht für Egress Link Budget),

c(L,F): das aggregierte Verkehrsaufkommen auf dem Netzabschnitts bzw. Link L,

aV(w,v,L): das anteilsmäßige Verkehrsaufkommen über den Link L des gesamten Verkehrsaufkommens zwischen dem Eingangsknoten w und dem Ausgangsknoten v,

Ingress(w): Der Grenzwert für den Verkehr über den Netzeingangsknoten w,

Egress(v): Der Grenzwert für den Verkehr über den Ausgangsknoten v,

$\delta$(w,v): Das Verkehrsaufkommen zwischen dem Netzeingangsknoten w und dem Netzausgangsknoten v.

BBB(w,v): die Grenze für das Verkehrsaufkommen zwischen dem Eingangsknoten w und dem Ausgangsknoten v,

Das Verkehrsaufkommen c(L,F) auf dem Link L setzt sich aus den aggregierten anteilsmäßigen Beiträge der einzelnen, über den Link L geleiteten Flows zusammen. Seien f1, ..., fn die Flows, von denen ein Teil des Verkehrs über den Link L geleitet wird und seinen p(L,fi), i e {1,..,n}, Maßzahlen für den über den Link L geleiteten Anteil des Flows fi. Dann gilt:

$$\texttt{c(L,F) = } \sum \texttt{fi * p(L,fi), Summen von i=1, .., n.}$$

Ein Flow von dem Eingangsknoten w zum Ausgangsknoten v wird nicht zugelassen, wenn bei Zulassung des Flows auf einem Link L der Anteil von c(L,F), der über den Zugangsknoten w in das Netz gelangt ist, den Grenzwert ILB(L,w) übersteigen würde, oder der Anteil von c(L,F), der zu dem Ausgangsknoten v fließt, den Grenzwert ELB(L,v) überschreiten würde.

Bei der Dimensionierung des Netzes sind folgende zwei Bedingungen für alle Links L einzuhalten:

$$\texttt{c(L,F)} \leq \sum \texttt{ILB(L,w), Summe über alle Zugangsknoten w} \qquad \texttt{(1)}$$

und

$$\texttt{c(L,F)} \leq \sum \texttt{ELB(L,v), Summe über alle Ausgangsknoten v.} \qquad \texttt{(2)}$$

Für alle Links L gilt:

$$c(L,F) = \sum \delta(i,j) \cdot aV(w,v,L), \text{ Summe über alle } w \text{ und } v. \quad (3)$$

Z.B. mit Hilfe des Simplex-Algorithmus können für vorgegebene Werte von ILB(L,w) und ELB(L,v) die maximalen c(L,F) berechnet werden, die die Ungleichungen (1),(2), oder (1) und (2) erfüllen. (Lösung der Gleichung (3) mit Randbedingungen (1), (2), oder (1) und (2)). Anders herum kann für einen Satz Grenzen bzw. Grenzwerte ILB(L,w) bzw. ELB(L,v) überprüft werden, ob auf einem Link L eine unzulässig hohe Last auftreten kann. Eine der zu hohen Last entgegenwirkende Änderung der Grenzen bzw. Grenzwerte kann in diesem Fall vorgenommen werden.

Das erfinderische Verfahren lässt auf einfache Weise zu, durch Änderung der Grenzen bzw. Grenzwerte auf Störungen zu reagieren. So kann bei dem Ausfall eines Links L der Zusammenhang diesen Link ausklammern (z.B. durch Nullsetzen aller aV(i,j,L) für diesen Link L). Durch die neue Formulierung des Zusammenhangs können abgeänderte Grenzen bzw. Grenzwerte ermittelt werden, die als Zulässigkeitskriterien Überlast innerhalb des Netzes verhindern.

Für die Ausgestaltung mit einer zusätzlichen Zulässigkeitsprüfung

- entweder mittels eines Grenzwertes Ingress(w) für den bei einem Eingangsknoten in das Netz einfließenden Verkehr,
- oder mittels eines Grenzwertes Egress(v) für den bei einem Ausgangsknoten das Netz verlassenden Verkehr,
- oder mittels eines Grenzwertes BBB(w,v) für das Verkehrsaufkommen zwischen Netzeingangsknoten w und Netzausgangsknoten v

lassen sich weitere Ungleichungen formulieren:

Für alle Eingangsknoten w

$$\sum \delta(w,v) \leq \text{Ingress}(w), \text{ Summe über alle } v. \quad (4)$$

Für alle Ausgangsknoten v

$$\sum \delta(w,v) \leq \text{Egress}(v), \text{ Summe über alle } w. \quad (5)$$

Für alle 2-Tupel (w,v)

$$\delta(i,j) \leq \text{BBB}(w,v). \quad (6)$$

Es gilt wieder Gleichung (3) unter Randbedingungen zu lösen. Die Optimierung kann unter einer beliebigen Kombination von Bedingungen (1), (2), (4), (5) und (6) vorgenommen werden. Ein Satz von Bedingungen der Form (1), (2), (4), (5) oder (6) jeweils für alle Links L, alle Eingangsknoten w bzw. Ausgangsknoten v oder alle 2-Tupel (w,v) aus Eingangs- und Ausgangsknoten sind hinreichend für die Dimensionierung des Netzes. Weitere Bedingungen können jeweils beliebig als komplette Sätze von Bedingungen (d.h. z.B. für alle Links L oder alle Eingangsknoten w) oder als Einzelbedingungen (z.B. Bedingung (1) oder (2) für einen bestimmten Link L) dazugenommen werden. Da mit zusätzlichen Bedingungen bei der Formulierung des Problems mehr Bedingungen zu erfüllen sind, sind die maximalen Werte für c(L,F) kleiner oder gleich als bei der Lösung ohne zusätzliche Bedingungen. Zusätzliche Bedingungen schränken den Lösungsraum ein und führen bei gleichen Werten für die Grenzwerte zu kleineren Werten c(L,F) hinsichtlich der Dimensionierung der Links L. Bei der Umkehrung des Problems führen folglich bei gleichen vorgegebenen Werten für die maximale Kapazität c(L,F) der Links L zusätzliche Bedingungen zu größeren Werten für die Grenzwerte. Man hat daher mehr Flexibilität bei der Festsetzung der Grenzen, und damit bezüglich der optimalen Auslastung des Netzes. Zusätzliche Bedingungen können z.B. nach Maßgabe der Topologie des Netzes eingeführt werden.

**Patentansprüche**

1. Verfahren zur Verkehrsbegrenzung in einem paketorientierten Netz mit einer Mehrzahl von Teilstrecken, bei dem

   - für eine Gruppe von über das Netz zu übertragenden Datenpaketen eines Flows für alle Teilstrecken L, über die Pakete aus der dem Flow zugehörigen Gruppe von Paketen geleitet werden, eine die jeweilige Teilstrecke L betreffende Zulässigkeitsprüfung durchgeführt wird, wobei
   - die Gruppe von Datenpaketen bei einem Netzeingangsknoten w in das Netz eintreten soll,
   - die Zulässigkeitsprüfung mittels eines Grenzwertes für den gesamten Verkehr, der bei dem Netzeingangsknoten w eintritt und über die Teilstrecke L geleitet wird, durchgeführt wird, und
   - die Übertragung der Gruppe von Datenpaketen nicht zugelassen wird, wenn das Zulassen der Übertragung zu einem den Grenzwert überschreitenden Verkehr auf der Teilstrecke L führen würde.

2. Verfahren zur Verkehrsbegrenzung in einem paketorientierten Netz mit einer Mehrzahl von Teilstrecken, bei dem

   - für eine Gruppe von über das Netz zu übertragenden Datenpaketen eines Flows eine Teilstrecke L betreffende Zulässigkeitsprüfung durchgeführt wird, wobei
   - die Gruppe von Datenpaketen bei einem Netzausgangsknoten v das Netz verlassen soll,
   - die Zulässigkeitsprüfung mittels eines Grenzwertes für den gesamten Verkehr, der über die Teilstrecke L geleitet wird und über den Netzausgangsknoten v das Netz verlässt, durchgeführt wird, und
   - die Übertragung der Gruppe von Datenpaketen nicht zugelassen wird, wenn das Zulassen der Übertragung zu einem den Grenzwert überschreitenden Verkehr auf der Teilstrecke L führen würde.

3. Verfahren nach Anspruch 1 und 2,
   **dadurch gekennzeichnet,**

   - **dass** zwei die Teilstrecke L betreffende Zulässigkeitsprüfungen durchgeführt werden, wobei
   - eine Zulässigkeitsprüfung entsprechend Anspruch 1 durchgeführt wird, und
   - die andere Zulässigkeitsprüfung entsprechend Anspruch 2 durchgeführt wird, und
   - die Übertragung der Gruppe von Datenpaketen nicht zugelassen wird, wenn ein Zulassen der Übertragung zu einem einen der beiden Grenzwerte, überschreitenden Verkehr auf der Teilstrecke L führen würde.

4. Verfahren nach einem der vorhergehenden Ansprüche,
   **dadurch gekennzeichnet,**

   - **dass** für alle Teilstrecken L, über die Pakete aus der dem Flow zugehörigen Gruppe von Paketen geleitet werden, eine Zulässigkeitsprüfung nach Anspruch 1 oder 2 bzw. zwei Zulässigkeitsprüfungen nach Anspruch 3 durchgeführt werden.

5. Verfahren nach einem der vorhergehenden Ansprüche,
   **dadurch gekennzeichnet,**

   - **dass** eine weitere Zulässigkeitsprüfung durchgeführt wird, wobei
   - die Zulässigkeitsprüfung mittels eines Grenzwertes für den gesamten über den Netzeingangsknoten des Flows geleiteten Verkehrs durchgeführt wird, und
   - die Übertragung der Gruppe von Datenpaketen nicht zugelassen wird, wenn das Zulassen der Übertragung zu einem den Grenzwert überschreitenden Verkehr bei dem Netzeingangsknoten w führen würde.

6. Verfahren nach einem der vorhergehenden Ansprüche,
   **dadurch gekennzeichnet,**

   - **dass** eine weitere Zulässigkeitsprüfung durchgeführt wird, wobei
   - die Zulässigkeitsprüfung mittels eines Grenzwertes für den gesamten über den Netzausgangsknotenknoten des Flows geleiteten Verkehrs durchgeführt wird, und
   - die Übertragung der Gruppe von Datenpaketen nicht zugelassen wird, wenn das Zulassen der Übertragung zu einem den Grenzwert überschreitenden Verkehr bei dem Netzausgangsknoten v führen würde.

7. Verfahren nach einem der vorhergehenden Ansprüche,

**dadurch gekennzeichnet,**

- **dass** eine weitere Zulässigkeitsprüfung durchgeführt wird, wobei
- die Zulässigkeitsprüfung mittels eines Grenzwertes für den gesamten von dem Netzeingangsknoten des Flows zu dem Netzausgangsknoten geleiteten Verkehrs durchgeführt wird, und
- die Übertragung der Gruppe von Datenpaketen nicht zugelassen wird, wenn ein Zulassen der Übertragung zu einem den Grenzwert überschreitenden Verkehr zwischen dem Netzeingangsknoten w und dem Netzausgangsknoten v führen würde.

8. Randknoten mit Mitteln zur Durchführung eines Verfahrens nach einem der Ansprüche 1 bis 6.


**Claims**

1. A method for traffic limitation in a packet-oriented network including a plurality of part routes, in which

- in respect of a group of data packets which must be transmitted over the network, said data packets belonging to a flow, for all part routes L via which packets from the group of packets belonging to the flow are carried, a compliance check relative to the relevant part route L is carried out, wherein
- the group of data packets is to enter the network at a network entry node w,
- the compliance check is carried out by means of a limit value for the total traffic which enters at the network entry node w and is carried over the part route L, and
- the transmission of the group of data packets is not authorized if the authorization of the transmission would result in traffic, on the part route L, which would exceed the limit value.

2. A method for traffic limitation in a packet-oriented network including a plurality of part routes, in which

- in respect of a group of data packets which must be transmitted over the network, said data packets belonging to a flow, a compliance check relative to a part route L is carried out, wherein
- the group of data packets is to leave the network at a network exit node v,
- the compliance check is carried out by means of a limit value for the total traffic which is carried over the part route L and leaves the network via the network exit node v, and
- the transmission of the group of data packets is not authorized if the authorization of the transmission would result in traffic, on the part route L, which would exceed the limit value.

3. The method as claimed in claims 1 and 2,
**characterized in that**

- two compliance checks relative to the part route L are carried out, wherein
- one compliance check is carried out in accordance with claim 1, and
- the other compliance check is carried out in accordance with claim 2, and
- the transmission of the group of data packets is not authorized if authorization of the transmission would result in traffic, on the part route L, which would exceed the two limit values.

4. The method as claimed in one of the preceding claims,
**characterized in that**

- for all part routes L via which packets from the group of packets belonging to the flow are carried, a compliance check as claimed in claim 1 or 2 is carried out, or two compliance checks as claimed in claim 3 are carried out.

5. The method as claimed in one of the preceding claims,
**characterized in that**

- a further compliance check is carried out, wherein
- the compliance check is carried out by means of a limit value for the total traffic which is carried via the network entry node of the flow, and
- the transmission of the group of data packets is not authorized if the authorization of the transmission would result in traffic, at the network entry node w, which would exceed the limit value.

**6.** The method as claimed in one of the preceding claims,
**characterized in that**

- a further compliance check is carried out, wherein
- the compliance check is carried out by means of a limit value for the total traffic which is carried via the network exit node of the flow, and
- the transmission of the group of data packets is not authorized if the authorization of the transmission would result in traffic, at the network exit node v, which would exceed the limit value.

**7.** The method as claimed in one of the preceding claims,
**characterized in that**

- a further compliance check is carried out, wherein
- the compliance check is carried out by means of a limit value for the total traffic which is carried from the network entry node of the flow to the network exit node, and
- the transmission of the group of data packets is not authorized if authorization of the transmission would result in traffic, between the network entry node w and the network exit node v, which would exceed the limit value.

**8.** Boundary nodes with means for carrying out a method as claimed in one of the claims 1 to 6.


**Revendications**

**1.** Procédé de limitation de trafic dans un réseau orienté paquets comprenant une pluralité de tronçons partiels, dans lequel

- pour un groupe de paquets de données d'un flux à transmettre par le réseau pour tous les tronçons partiels L, par lesquels des paquets provenant du groupe de paquets spécifique au flux sont guidés, on effectue un test d'admissibilité concernant le tronçon partiel L respectif,
- le groupe de paquets de données devant entrer par un noeud d'entrée de réseau w dans le réseau,
- le test d'admissibilité étant effectué au moyen d'une valeur limite pour l'ensemble du trafic qui entre au noeud d'entrée de réseau w et est guidé par le tronçon partiel, et
- la transmission du groupe de paquets de données n'étant pas autorisée lorsque l'autorisation de la transmission entraînerait un trafic dépassant la valeur limite sur le tronçon partiel.

**2.** Procédé de limitation de trafic dans un réseau orienté paquets comprenant une pluralité de tronçons partiels, dans lequel

- un test d'admissibilité concernant un tronçon partiel L est effectué pour un groupe de paquets de données d'un flux, à transmettre par le réseau,
- le groupe de paquets de données devant quitter le réseau en un noeud de sortie de réseau,
- le test d'admissibilité étant effectué au moyen d'une valeur limite pour l'ensemble du trafic qui est guidé par le tronçon partiel L et quitte le réseau par le noeud de sortie de réseau v, et
- la transmission du groupe de paquets de données n'étant pas autorisée lorsque l'autorisation de la transmission entraînerait un trafic dépassant la valeur limite sur le tronçon partiel L.

**3.** Procédé selon les revendications 1 et 2,
**caractérisé en ce que**

- deux tests d'admissibilité concernant le tronçon partiel L sont effectués,
- un test d'admissibilité étant effectué selon la revendication 1, et
- l'autre test d'admissibilité étant effectué selon la revendication 2, et
- la transmission du groupe de paquets de données n'étant pas autorisée lorsqu'une autorisation de la transmission entraînerait sur le tronçon partiel L un trafic dépassant les deux valeurs limites.

**4.** Procédé selon l'une quelconque des revendications précédentes,
**caractérisé en ce que**,

- pour tous les tronçons partiels L, par lesquels sont guidés des paquets du groupe de paquets faisant partie du flux, un test d'admissibilité est effectué selon la revendication 1 ou 2 resp. deux tests d'admissibilité sont effectués selon la revendication 3.

5. Procédé selon l'une quelconque des revendications précédentes,
**caractérisé en ce que**

- un autre test d'admissibilité est effectué,
- le test d'admissibilité étant effectué au moyen d'une valeur limite pour l'ensemble du trafic guidé par le noeud d'entrée de réseau du flux, et
- la transmission du groupe de paquets de données n'étant pas autorisée si l'autorisation de la transmission entraînait un trafic dépassant la valeur limite sur le noeud d'entrée de réseau w.

6. Procédé selon l'une quelconque des revendications précédentes,
**caractérisé en ce que**

- un autre test d'admissibilité est effectué,
- le test d'admissibilité étant effectué au moyen d'une valeur limite pour l'ensemble du trafic guidé par le noeud de sortie de réseau du flux, et
- la transmission du groupe de paquets de données n'étant pas autorisée si l'autorisation de la transmission entraînerait un trafic dépassant la valeur limite sur le noeud de sortie de réseau v.

7. Procédé selon l'une quelconque des revendications précédentes,
**caractérisé en ce que**

- un autre test d'admissibilité est effectué,
- le test d'admissibilité étant effectué au moyen d'une valeur limite pour l'ensemble du trafic guidé par le noeud d'entrée de réseau du flux vers le noeud de sortie de réseau, et
- la transmission du groupe de paquets de données n'étant pas autorisée si une autorisation de la transmission entraînerait un trafic dépassant la valeur limite entre le noeud d'entrée de réseau w et le noeud de sortie de réseau v.

8. Noeud périphérique comprenant des moyens pour la mise en oeuvre d'un procédé selon l'une quelconque des revendications 1 à 6.